(19) Europäisches Patentamt
European Patent Office
Office européen des brevets

(11) **EP 3 768 619 B1**

## (12) EUROPÄISCHE PATENTSCHRIFT

(45) Veröffentlichungstag und Bekanntmachung des Hinweises auf die Patenterteilung:
**13.12.2023   Patentblatt 2023/50**

(21) Anmeldenummer: **19714315.9**

(22) Anmeldetag: **20.03.2019**

(51) Internationale Patentklassifikation (IPC):
*B65G 35/08* (2006.01)    *B65G 35/06* (2006.01)
*B65G 33/06* (2006.01)    *B65G 37/00* (2006.01)

(52) Gemeinsame Patentklassifikation (CPC):
**B65G 35/066; B65G 33/06; B65G 35/06; B65G 35/08; B65G 37/005**

(86) Internationale Anmeldenummer:
**PCT/EP2019/000085**

(87) Internationale Veröffentlichungsnummer:
**WO 2019/179657 (26.09.2019 Gazette 2019/39)**

(54) **ENDLOS UMLAUFENDE BEHÄLTER-FÖRDERVORRICHTUNG IN EINER VERPACKUNGSMASCHINE**

CONTINUOUSLY CIRCULATING CONTAINER CONVEYOR DEVICE IN A PACKAGING MACHINE

DISPOSITIF DE TRANSPORT DE RÉCIPIENTS CIRCULANT SANS FIN DANS UNE MACHINE D'EMBALLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2018   DE 102018002280**

(43) Veröffentlichungstag der Anmeldung:
**27.01.2021   Patentblatt 2021/04**

(73) Patentinhaber: **ERCA**
**91940 Les Ulis (FR)**

(72) Erfinder:
• **STIEGLER, Achim**
  **74564 Crailsheim (DE)**
• **PILAT, Marcel**
  **74532 Ilshofen (DE)**

• **GLÜCK, Moritz**
  **82362 Weilheim (DE)**
• **GRAF, Timo**
  **73663 Berglen (DE)**
• **KURR, Daniel**
  **74582 Gerabronn (DE)**
• **VAAS, Daniel**
  **91550 Dinkelsbühl (DE)**

(74) Vertreter: **Cabinet Beau de Loménie**
**158, rue de l'Université**
**75340 Paris Cedex 07 (FR)**

(56) Entgegenhaltungen:
**EP-A1- 0 089 543    EP-A1- 0 995 700**
**DE-A1- 4 216 671    US-A1- 2009 321 220**

**Beschreibung**

Die Erfindung betrifft eine Verpackungsmaschine mit einer endlos umlaufenden Behälter-Fördervorrichtung, insbesondere eine Becherfüllmaschine.

Im Folgenden wird beispielhaft von einer Becherfüllmaschine als Verpackungsmaschine ausgegangen, jedoch ist die Erfindung darauf nicht beschränkt.

In einer Becherfüllmaschine werden mehrere, üblicherweise aus Kunststoff bestehende leere Becher in eine Behälteraufnahme, d.h. ein sogenanntes Zellenblech eingesetzt, und mit der Behälteraufnahme durch verschiedene Arbeitsstationen der Becherfüllmaschine transportiert. Bei den Arbeitsstationen kann es sich insbesondere um eine Sterilisationsstati on, eine Füllstation, eine Verschließstation oder eine Entnahmestation handeln.

Es sind mehrere Behälteraufnahmen vorgesehen, die an einer endlos umlaufenden Fördervorrichtung in Form eines Paares parallel angeordneter Ketten montiert sind. Solange sich die Behälteraufnahme auf dem Obertrum der Fördervorrichtung befindet, wird sie durch die Arbeitsstationen der Becherfüllmaschine geführt. Am Ende des Obertrums der Fördervorrichtung sind die Becher aus der Behälteraufnahme entnommen und die Behälteraufnahme wird insbesondere über ein Ketten rad um 180° auf das Untertrum geleitet und entlang dem Untertrum an das entgegengesetzte Ende der Fördervorrichtung geführt und dann mittels eines Kettenrades dann wieder zum Obertrum gebracht.

Eine entsprechende umlaufende Fördervorrichtung in Form von umlaufenden Ketten ist seit langem bekannt, jedoch mit einigen Nachteilen verbunden. Insbesondere ist es nachteilig, dass zwischen einzelnen Kettengliedern ein geringes Spiel gegeben ist, was sich über die Länge der Kette jedoch auf summiert und somit zu unpräzisen Förderbewegungen führt. Darüber hinaus nutzt sich die Kette im Laufe einer langen Betriebsdauer ab, wodurch sie sich verlängert, so dass die Position der Fördervorrichtung zu den einzelnen Arbeitsstationen immer wieder angepasst und nachgestellt werden muss, was einerseits zeit- und arbeitsaufwändig ist und andererseits den Nachteil mit sich bringt, dass die Becherfüllmaschine während dieser Zeit inaktiv ist.

Bei Verwendung einer Kette sind die Behälterträger über den gesamten Verlauf der Kette in gleichem gegenseitigen Ab stand in endloser Reihe angeordnet. Da im Bereich des Ober trums, in dem die Behandlung bzw. Befüllung der in den Behälterträger eingesetzten Becher erfolgt, eine möglichst kontinuierliche enge Becherfolge und damit Behälterträgerreihe gegeben sein muss, sind die Behälterträger über die gesamte Länge der Kette in enger Folge angeordnet, obwohl nur im Bereich des Obertrumms eine entsprechend enge Folge notwendig ist. Auf diese Weise ist eine groß Anzahl von Behälterträgern vorgesehen, von denen immer nur ein geringer Anteil gleichzeitig mit Bechern besetzt ist. Dadurch wird die Behälter-Fördervorrichtung relativ kostenintensiv.

EP 0 089 543 offenbart eine Verpackungsmaschine mit einer endlos umlaufende Behälter-Fördervorrichtung mit zumindest einem Behälterträger,

mit zumindest zwei übereinander angeordneten Linearförderern in Form von jeweils einer drehangetriebenen Förderschnecke, wobei der Behälterträger ein Eingriffsteil aufweist, das mit den Förderschnecken zur Übertragung einer Antriebsbewegung in Eingriff bringbar ist,

mit zwei Kurvenförderern, die jeweils eine gekrümmte Führungsbahn und jeweils eine rotierende Antriebsvorrichtung aufweisen, die zumindest eine Aufnahme besitzt, die mit dem Behälterträger in Eingriff bringbar ist, wobei in Transportrichtung zwischen den beiden Linearförderern jeweils einer der Kurvenförderer angeordnet ist,

wobei der Behälterträger am Ende der Förderschnecken mit diesen außer Eingriff bringbar und mit der rotierenden Antriebsvorrichtung des darauffolgenden Kurvenförderers in Eingriff bringbar ist,

wobei die Linearförderer und die Kurvenförderer eine umlaufende Transportbahn bilden.

Der Erfindung liegt die Aufgabe zugrunde, eine Verpackungsmaschine mit einer endlos umlaufenden Behälter-Fördervorrichtung zu schaffen, bei der die Anzahl der verwendeten Behälterträger optimiert werden kann.

Diese Aufgabe wird durch eine Verpackungsmaschine mit den Merkmalen des Anspruchs 1 gelöst.

Erfindungsgemäß wird von der Grundüberlegung ausgegangen, die bisher übliche umlaufende Kette in mehrere einzelne Förderer zu unterteilen, die im Zusammenwirken die Transportbewegung einer endlos umlaufenden Kette nachbilden. Dabei sind zumindest zwei Linearförderer in Form von jeweils zumindest einer drehangetriebenen Förderschnecke vorgesehen. Der Behälterträger weist zumindest ein Ein griffteil auf, das mit den Förderschnecken zur Übertragung einer Antriebsbewegung in Eingriff bringbar ist. Wenn die Förderschnecke gedreht wird, führt die Drehbewegung über den Ein griff des Eingriffsteils zu einer linearen Verschiebung des Behälterträgers.

Zusätzlich sind zumindest zwei Kurvenförderer vorgesehen, die jeweils eine gekrümmte Führungsbahn aufweisen. Zumindest ein Vorsprung des Behälterträgers kann mit der gekrümmten Führungsbahn in Eingriff gebracht werden, so dass der Behälterträger während der gekrümmten Transportbewegung entlang der Führungsbahn sicher geführt ist.

Für die Antriebsbewegung längs der gekrümmten Führungsbahn ist jedem Kurvenförderer eine rotierende Antriebsvorrichtung zugewiesen, die zumindest eine Aufnahme besitzt, die mit dem Behälterträger in Eingriff bringbar ist, so dass die Antriebsbewegung von der Antriebsvorrichtung auf den Behälterträger übertragen werden kann.

Zur Nachbildung der endlos umlaufenden Fördervorrichtung ist vorgesehen, dass in Transportrichtung zwischen den beiden Linearförderern jeweils einer der Kurvenförderer angeordnet ist, d.h. Linearförderer und Kurvenförderer sind vorzugsweise alternierend angeordnet. Dabei ist insbesondere vorgesehen, dass die Linearförderer mit Abstand übereinander angeordnet sind und dass die Endbereiche der Linearförderer über jeweils einen Kurvenförderer miteinander verbunden sind.

Aufgrund der Unterteilung der endlos umlaufenden Transport bahn in Linearförderer und Kurvenförderer sind einerseits die Nachteile der verschleißbedingten Längung einer Kette vermieden, andererseits ist es möglich, eine präzise Transportbewegung über eine längere Betriebsdauer zu gewährleisten. Falls einer der Förderer ausgewechselt werden muss, lässt sich dies über entsprechende austauschbare Module einfach und schnell erreichen.

Der Behälterträger läuft bei Betrieb der Behälter-Fördervorrichtung infolge der Drehung der Förderschnecke längs des beispielsweise oberen Linearförderers. Am Ende der Förderschnecke des Linearförderers wird das Eingriffsteil des Behälterträgers mit der Förderschnecke außer Eingriff ge bracht und gleichzeitig mit der rotierenden Antriebsvorrichtung des in Transportrichtung darauffolgenden Kurvenförderers in Eingriff gebracht, so dass der Behälterträger dann infolge der Antriebsbewegung der rotierenden Antriebsvorrichtung längs des Kurvenförderers bewegt wird. Dabei werden die Antriebsbewegungen der Förderschnecke und der rotierenden Antriebsvorrichtung synchronisiert.

Am Ende des Kurvenförderers wird der Behälterträger mit der rotierenden Antriebsvorrichtung des Kurvenförderers außer Eingriff gebracht und gleichzeitig mit seinem Eingriffsteil in Eingriff mit der Förderschnecke des unteren Linearförderers gebracht, so dass der Behälterträger anschließend längs des unteren Linearförderers bewegt wird. Am Ende des unteren Linearförderers tritt dieser in genannter Weise an den zweiten Kurvenförderer über und wird durch die entsprechende rotierende Antriebsvorrichtung längs des Kurvenförderers bewegt und am Ende der Bewegung wieder an die Förderschnecke des oberen Linearförderers übergeben. Auf diese Weise bilden die Linearförderer und die Kurvenförderer eine umlaufende Transportbahn, die vorzugsweise durch zwei auf Abstand übereinander angeordnete Linearförderer und am Ende der Linearförderer angeordnete Kurvenförderer gebildet ist, die den Behälterträger um 180° umlenken.

Längs des oberen Linearförderers, d.h. im Bereich des Obertrumms, sind mehrere Behälterträger in einer Reihe mit einem gegenseitigen 1. Abstand von weniger als 30mm und mit einer mittleren Geschwindigkeit VD transportierbar. Aufeinanderfolgende Behälterträger können auch in gegenseitigem Kontakt stehen, so dass eine geschlossene Reihe gebildet ist. Vorzugsweise ist zwischen aufeinanderfolgenden Behälterträgern jedoch ein geringer Abstand von weniger als 10mm vorgesehen. Auf diese Weise ist sichergestellt, dass die im Bereich des Obertrumms bzw. des oberen Linearförderers an geordneten Arbeitsstationen die in Behälterträgern aufgenommenen Becher und Behälter kontinuierlich bearbeiten und insbesondere füllen und verschließen können.

Nachdem ein Behälterträger mittels des am Ende des oberen Linearförderers angeordneten Kurvenförderers auf den unteren Linearförderer umgesetzt ist, wird der Behälterträger mit einer mittleren Geschwindigkeit $V_u$ transportiert, die größer als die Geschwindigkeit V des Transports entlang dem oberen Linearförderers ist, wobei gilt, dass Vu > 1,5 V0 und insbesondere $V_u$ > 2,5 V ist. Während des Transports längs des unteren Linearförderers werden die Behälterträger somit in einem gegenseitigen 2. Abstand transportiert, der größer als der 1. Abstand ist. Auf diese Weise ist die Anzahl der notwendigen Behälterträger, die man braucht, um im Bereich des Obertrums eine kontinuierliche Reihe von Behälterträgern sicherzustellen, verringert.

Vorzugsweise sind die beiden Linearförderer im wesentlichen baugleich, wodurch die Herstellung der Behälter-Fördervorrichtung vereinfacht ist.

In der Erfindung ist vorgesehen, dass der Linearförderer zwei auf Abstand parallel nebeneinander angeordnete Förderschnecken aufweist. Die Förderschnecken können horizontal ausgerichtet sein und sind jeweils um ihre Längsachse drehbar. Die Drehbewegung der Förderschnecken ist synchronisiert und kann gleichsinnig oder gegensinnig erfolgen.

In bevorzugter Ausgestaltung der Erfindung ist vorgesehen, dass zumindest eine der Förderschnecken und vorzugsweise aller Förderschnecken aus mehreren axial hintereinander an geordneten Förderschneckenteilen gebildet ist, die drehfest miteinander verbunden sind. Die Verbindung der Förderschneckenteile kann durch Klemmung, Rastung oder Verschraubung erfolgen, so dass einzelne Förderschneckenteile bei Bedarf in einfacher Weise ausgebaut und ausgetauscht werden können. Die Verbindung der Förderschneckenteile zu einer einheitlichen Förderschnecke bringt den Vorteil mit sich, dass nur eine Antriebsvorrichtung für die Förderschnecke notwendig ist.

Zwischen den Förderschnecken ist der plattenförmige Behälterträger angeordnet, der den Abstand zwischen den Förderschnecken überbrückt und an seinen den Förderschnecken zugewandten Stirnseiten jeweils das Eingriffsteil trägt, das zwischen die Windungen der Förderschnecken eingreift, so dass bei deren Drehbewegung eine axiale Transportbewegung auf den Behälterträger übertragen wird.

In Weiterbildung kann vorgesehen sein, dass jeder Förderschnecke eine Schiene zugeordnet ist, auf der der Behälterträger verfahrbar ist. Zu diesem Zweck kann der Behälterträger auf seinen den Förderschnecken zugewandten Stirnseiten jeweils mehrere und insbesondere jeweils zwei Rollen aufweisen, die in Transportrichtung beabstandet sind und mit denen er auf den Schienen verfahrbar abgestützt ist. Die Schienen nehmen somit das Gewicht des Behälterträgers und der gegebenenfalls eingesetzten Becher auf und leiten dieses ab. Die Förderschnecken können auf diese Weise al lein zur Übertragung der Transportbewegung auf den Behälterträger dienen.

Falls der Abstand zwischen den Förderschnecken relativ groß ist, kann im mittleren Bereich des zwischen den Förderschnecken gebildeten Zwischenraums eine weitere Mittel schiene gebildet sein, auf der der Behälterträger zusätzlich abgestützt ist. Auf diese Weise kann ein Durchhängen des Behälterträgers auch bei relativ großen Behältern und schweren Produkten zumindest weitestgehend vermieden werden.

Die beiden Kurvenförderer sind vorzugsweise baugleich aus gebildet, wodurch die Konstruktion vereinfacht ist. In bevorzugter Ausgestaltung der Erfindung ist vorgesehen, dass der Kurvenförderer zwei auf Abstand nebeneinander angeordnete Führungsträger aufweist, an denen jeweils eine gekrümmte und vorzugsweise um 180° umlaufende Führungsbahn ausgebildet ist. Die beiden Führungsbahnen stellen sicher, dass der Behälterträger während seiner Bewegung längs der Kurvenförderer sicher geführt ist.

Die Rollen, über die sich der Behälterträger auf den Schienen abstützt, tragen vorzugsweise jeweils eines der Ein griffsteile insbesondere in Form einer vorzugsweise koaxial zu der Rolle angeordneten Eingriffsrolle. Auf diese Weise ist erreicht, dass jeder Behälterträger an seinen Stirnseiten über zwei in Transportrichtung beabstandete Rollen auf den Schienen abgestützt ist und zusätzlich über zwei in Transportrichtung voneinander beabstandete Eingriffsteile bzw. Eingriffsrollen mit den Linearförderern in Eingriff steht. Die Kombination der Rollen und der Eingriffsteile in einer gemeinsamen Baueinheit oder sogar in einem gemeinsamen Bauteil führt zu einem kompakten, funktionssicheren Aufbau.

Für den Kurvenförderer ist die rotierende Antriebsvorrichtung vorgesehen, die vorzugsweise an beiden Führungsträgern auf den Behälterträger eine Antriebskraft aufbringt. Die rotierende Antriebsvorrichtung des Kurvenförderers kann zwei auf Abstand nebeneinander angeordnete, drehangetriebene Rotoren aufweisen, die jeweils mehrere über den Umfang verteilt angeordnete Rotorarme besitzen. Dabei kann jedem Führungsträger ein Rotor zugeordnet sein. Vorzugsweise sind die Rotoren auf einer gemeinsamen, drehangetriebenen Achse montiert, es kann jedoch auch für jeden Rotor ein eigener Antrieb vorgesehen sein. Der Antrieb kann kontinuierlich oder auch diskontinuierlich, d.h. einer nicht geraden Weg-Zeit-Bewegungskurve folgend arbeiten.

Der Rotor besitzt vorzugsweise eine mittlere Nabe, von der aus sich die Rotorarme radial nach außen erstrecken und frei auskragen. Jedem Rotorarm kann zumindest eine radial nach außen öffnende Aufnahme zugeordnet sein. Die Aufnahme kann mit dem Eingriffsteil des Behälterträgers in Eingriff gebracht werden, wenn der Behälterträger von dem Linearförderer an den Kurvenförderer übergeben wird. Vorzugsweise ist das Kupplungsteil am radial äußeren freien Ende des jeweiligen Rotorarms angeordnet.

Wenn der Behälterträger längs des Linearförderers bewegt wird und dessen Ende erreicht, greift zunächst das in Transportrichtung vorlaufende Eingriffsteil des Behälterträgers in eine der Aufnahmen der Rotorarme des Rotors ein, so dass der Behälterträger in seinem in Transportrichtung vorlaufenden Abschnitt von dem Kurvenförderer übernommen ist. Gleichzeitig kommt das in Transportrichtung vorlaufende Eingriffsteil von der Förderschnecke frei. Bei einer weiteren Transportbewegung greift auch das in Transportrichtung nachlaufende Eingriffsteil in eine der Aufnahmen der Rotorarme des Rotors ein, so dass die weitere Bewegung des Behälterträgers allein durch die Drehung des Rotors erfolgt, die über den Rotorarm und die Aufnahme auf den Behälterträger übertragen wird. Dabei werden die Antriebsbewegungen der Förderschnecke und des Rotors synchronisiert.

Am Ende des Kurvenförderers erfolgt eine entsprechend umgekehrte Übergabe des Behälterteils an den anderen Linearförderer. Auf diese Weise ist eine endlos umlaufende Behälter-Fördervorrichtung gegeben, in der eine Bewegung des Behälterträgers mit hoher Präzision erreicht werden kann.

Die Erfindung umfasst auch eine Verpackungsmaschine mit einer endlos umlaufenden Behälter-Fördervorrichtung gemäß der vorstehenden Beschreibung, wobei es sich bei der Verpackungsmaschine vorzugsweise um eine Becherfüllmaschine handelt.

Weitere Einzelheiten und Merkmale der Erfindung sind aus der folgenden Beschreibung eines Ausführungsbeispiels unter Bezugnahme auf die Zeichnung ersichtlich. Es zeigen:

Fig. 1    Eine perspektivische Darstellung der erfindungsgemäßen endlos umlaufenden Behälter-Fördervorrichtung

Fig. 2    eine perspektivische Darstellung einiger Baugruppen der Behälter-Fördervorrichtung gemäß Figur 1 in einer 1. Phase der Transportbewegung,

Fig. 3    eine perspektivische Darstellung einiger Baugruppen der Behälter-Fördervorrichtung gemäß Figur 1 in einer 2. Phase der Transportbewegung,

Fig. 4    eine perspektivische Darstellung einiger Baugruppen der Behälter-Fördervorrichtung gemäß Figur 1 in einer 3. Phase der Transportbewegung,

Fig. 5    eine perspektivische Darstellung einiger Baugruppen der Behälter-Fördervorrichtung gemäß Figur 1 in einer 4. Phase der Transportbewegung,

Fig. 6 eine perspektivische Darstellung einiger Baugruppen der Behälter-Fördervorrichtung gemäß Figur 1 in einer 5. Phase der Transportbewegung,

Fig. 7 eine vergrößerte Seitenansicht des Rotors und

Fig. 8 eine vergrößerte Darstellung des Endbereichs eines Behälterträgers .

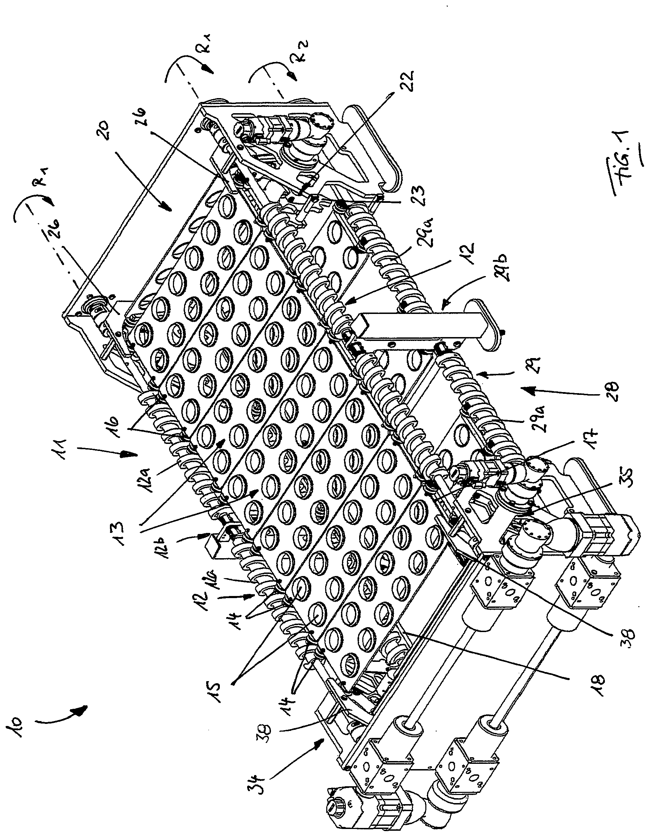

Figur 1 zeigt eine perspektivische Darstellung der wesentlichen Komponenten einer erfindungsgemäßen endlos umlaufen den Behälter-Fördervorrichtung 10 in einer Verpackungsmaschine, insbesondere einer Becherfüllmaschine. Die Behälter-Fördervorrichtung 10 weist einen oberen Linearförderer 11 auf, der zwei auf Abstand nebeneinander und parallel zu einander angeordnete Förderschnecken 12 besitzt, die im wesentlichen horizontal verlaufen und jeweils um ihre Längsachse drehangetrieben sind, wie es durch die Pfeile $R_1$ in Figur 1 angedeutet ist. Jede Förderschnecke 12 besteht im dargestellten Ausführungsbeispiel aus zwei koaxial angeordneten Förderschneckenteilen 12a, die in einem Verbindungsbereich drehfest miteinander verbunden sind und somit als Einheit drehen.

Zwischen den beiden Förderschnecken 12 sind mehrere plattenförmige Behälterträger 13 angeordnet, die jeweils Vielzahl von als Behälteraufnahme 15 dienenden Ausnehmungen besitzen. Ein entsprechender Behälterträger wird auch als Zellenblech bezeichnet.

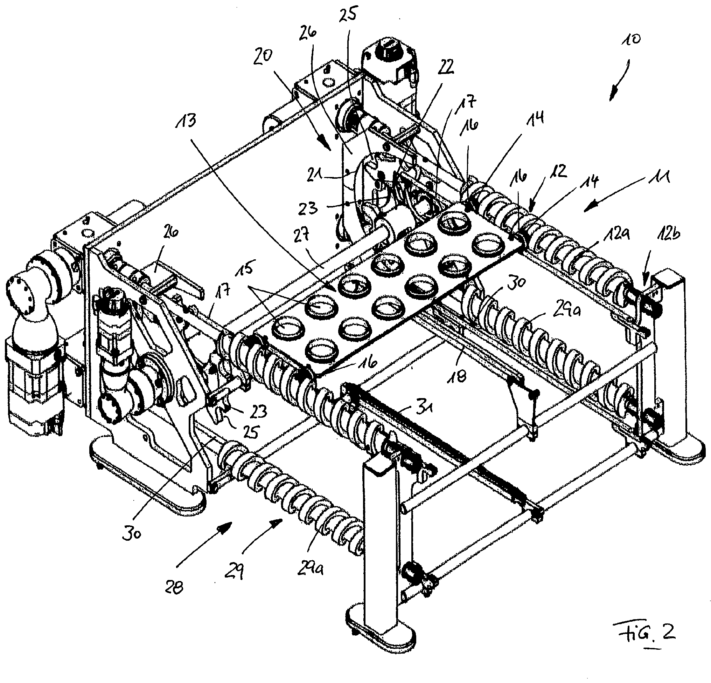

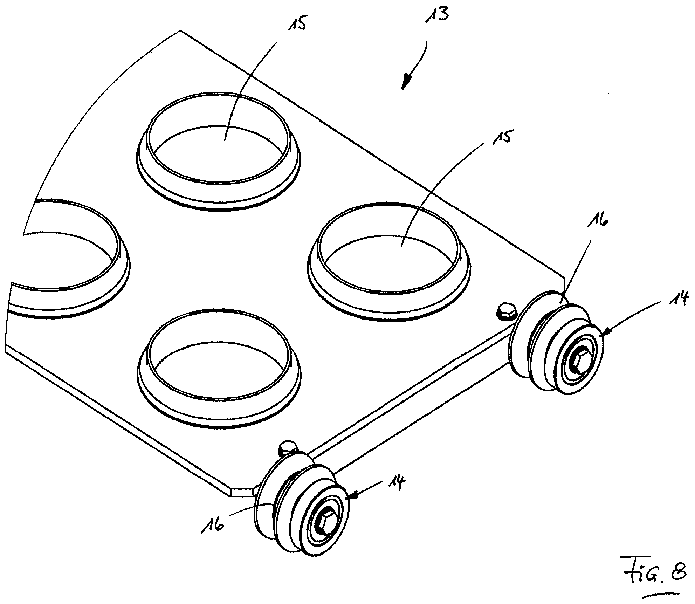

Parallel zu jeder Förderschnecke 12 verläuft auf der der jeweils anderen Förderschnecke 12 zugewandten Seite eine Schiene 17 (s. auch Fig. 2). Die Schienen 17 dienen der Abstützung des Behälterträgers 13 während seiner Bewegung innerhalb des oberen Linearförderers 11. Auf den den Förderschnecken 12 zugewandten Stirnseiten des Behälterträgers 13 sind jeweils zwei in Transportrichtung beabstandete Rollen 16 angeordnet, über die der Behälterträger 13 auf den Schienen 17 abgestützt ist (s. Fig. 8).

In dem Zwischenraum zwischen den beiden Förderschnecken 12 ist eine zusätzliche Mittelschiene 18 angeordnet, die parallel zu den Schienen 17 verläuft und dazu dient, den Behälterträger 13 während seines Transports innerhalb des oberen Linearförderers 11 im mittleren Bereich abzustützen, indem der Behälterträger 11 auf der Mittelschiene 18 aufliegt.

Mit Abstand unterhalb des oberen Linearförderers 11 ist ein im wesentlichen baugleicher unterer Linearförderer 28 angeordnet, der ebenfalls zwei parallele Förderschnecken 29 aufweist, die drehangetrieben sind, wie es durch die Pfeile R2 angedeutet ist. Jede Förderschnecke 29 besteht im dargestellten Ausführungsbeispiel aus zwei koaxial angeordneten Förderschneckenteilen 29a, die in einem Verbindungsbereich drehfest miteinander verbunden sind und somit als Einheit drehen. Auch der untere Linearförderer 28 besitzt zwei Schienen 30 (siehe Figur 2), die parallel zu der jeweiligen Förderschnecke 29 verlaufen. Zusätzlich ist eine den Behälterträger 13 abstützende Mittelschiene 31 vorgesehen.

An seinen den Förderschnecken 12 bzw. 29 zugewandten Stirnseiten der Rollen 16 besitzt der Behälterträger 13 jeweils ein Eingriffsteil 14, das in Form einer koaxial zu der jeweiligen Rolle 16 angeordneten Eingriffsrolle ausgebildet ist (s. Fig. 8) . Die Eingriffsteile 14 können mit den Förderschnecken 12 bzw. 29 jeweils so in Eingriff treten, dass bei einer Drehung der Förderschnecken 12 bzw. 29 eine lineare Verschiebung des Behälterträgers 13 längs der Schienen 17 bzw. 30 erfolgt.

An den axialen Enden des oberen Linearförderers 11 bzw. des unteren Linearförderers 28 ist jeweils ein Kurvenförderer 20 bzw. 34 vorgesehen. Die Kurvenförderer 20 bzw. 34 besitzen jeweils zwei Führungsträger 26, 38, in denen jeweils eine etwa halbkreisförmige gekrümmte Führungsbahn 21 bzw. 35 ausgebildet ist. Die Führungsbahn 21 bzw. 35 verbindet das Ende der zugeordneten Schiene 17 des oberen Linearförderers 11 mit dem Ende der zugeordneten Schiene 30 des unteren Linearförderers 28.

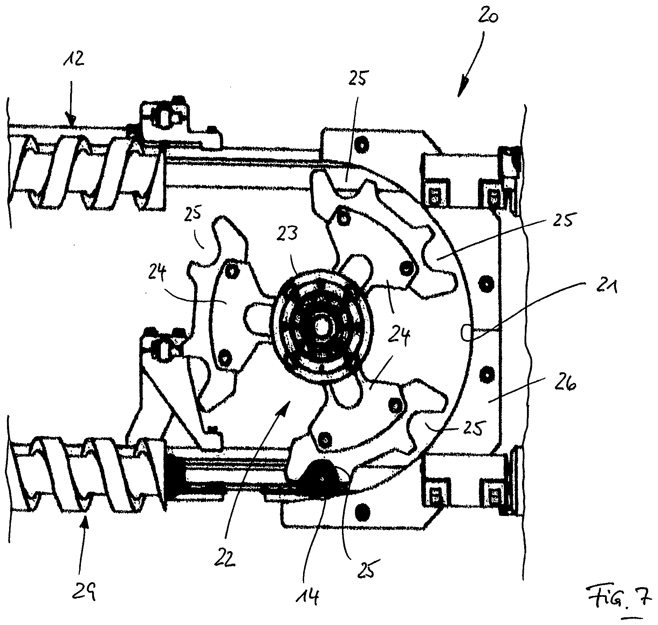

Ferner besitzt jeder Kurvenförderer 20 bzw. 34 eine rotierende Antriebsvorrichtung 22 bzw. 36. Die Antriebsvorrichtung 22 bzw. 36 umfasst eine drehangetriebene Welle 27 bzw. 41, die um ihre Längsachse drehbar ist, wie es durch die Pfeile R3 bzw. R4 angedeutet ist. Auf der Welle 27 bzw. 41 sitzen jeweils im Bereich der Führungsträger 26 bzw. 38 fest mit der Welle 27 bzw. 41 verbundene Rotoren 23 bzw. 39. Jeder Rotor 23 bzw. 39 besitzt drei über den Umfang verteilte, sich von der Welle 27 bzw. 41 radial nach außen erstreckende Rotorarme 24 bzw. 40 (s. auch Fig. 7), die an ihrem radial äußeren, freien Ende jeweils mehrere, radial nach außen öffnende Aufnahmen 25 bzw. 37 aufweisen. Die Aufnahmen sind in ihrer Formgebung an die Größe der Ein griffsteile 14 der Behälterträger 13 angepasst, so dass Eingriffsteile 14 unter enger Passung in den Aufnahmen 25 bzw. 37 aufnehmbar sind.

Im Folgenden soll anhand der Figuren 2 bis 6 die Übergabe eines Behälterträgers 13 von dem oberen Linearförderer 11 an den Kurvenförderer 20 und dann vom Kurvenförderer 20 an den unteren Linearförderer 28 erläutert werden. In der in Figur 2 dargestellten Stellung befindet sich der Behälterträger 13 in dem oberen Linearförderer 11. Durch Drehung der Förderschnecken 12 wird über den Eingriff der Ein griffsteile 14 in die Förderschnecken 12 eine lineare Transportbewegung des Behälterträgers 13 längs der Schienen 17 erzeugt, wobei der Behälterträger 13 sich über die Rollen 16 auf den Schienen 17 und zusätzlich auf der Mittel schiene 18 abstützt. Der Abstand der Eingriffsteile 14 des Behälterträgers 13 in Förderrichtung ist so groß, dass bei der Transportbewegung längs der Förderschnecken 12 der im Verbindungsbereich 12b vorhandene Abstand zwischen den axial angeordneten Förderschneckenteilen 12a überbrückt wird, d.h. in jedem Zustand der Förderbewegung befindet sich zumindest ein Eingriffsteil 14 in Eingriff mit einem der Förderschneckenteile 12a.

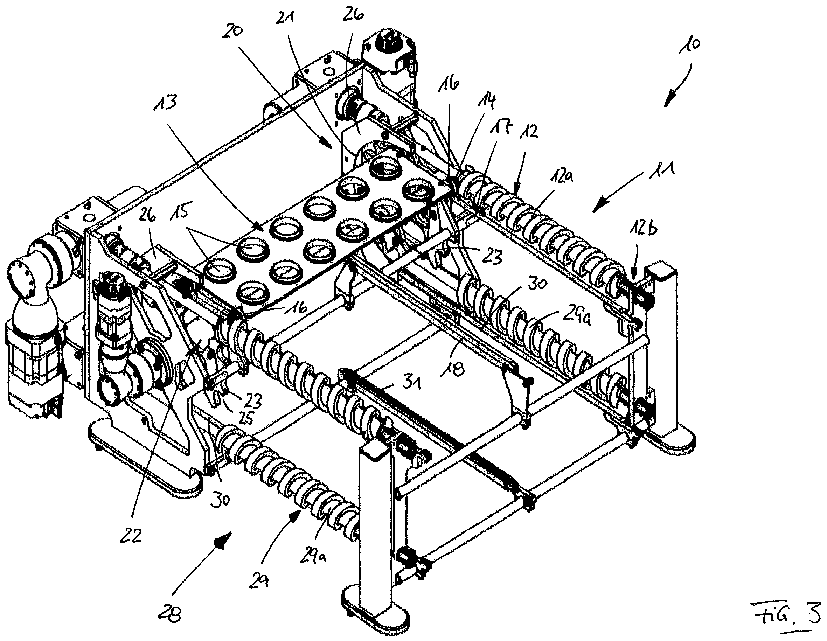

Am Ende der linearen Transportbewegung hat der Behälterträger 13 den Endbereich der Förderschnecken 12 des oberen Linearförderers 11 erreicht. Die Bewegungen der Förderschnecken 12 und der Rotoren 23 sind so synchronisiert, dass die am freien Ende der Rotorenarme 24 ausgebildeten Aufnahmen 25 von unten mit den am Behälterträger 13 angebrachten Eingriffsteilen 14 der in Transportrichtung verlaufenden Rollen 16 in Eingriff treten. Unmittelbar darauf (Figur 3) kommen die Eingriffsteile 14 der in Transportrichtung nach laufenden Rollen 16 von den Förderschnecken 12 des oberen Linearförderers 11 frei, so dass die weitere Transportbewegung von den Rotoren 23 erzeugt wird. Der Behälterträger 13 greift nunmehr mit allen Eingriffsteilen 14 in die Aufnahmen 25 der Rotoren 23 ein.

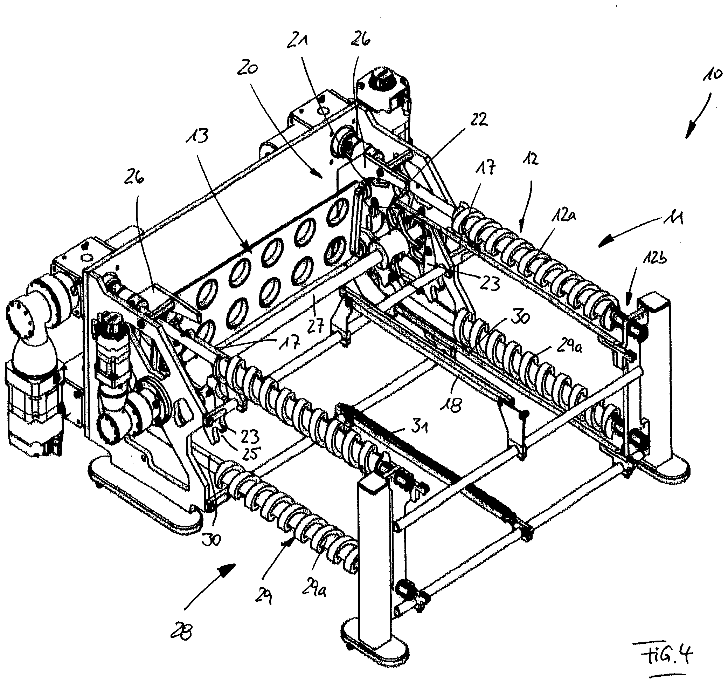

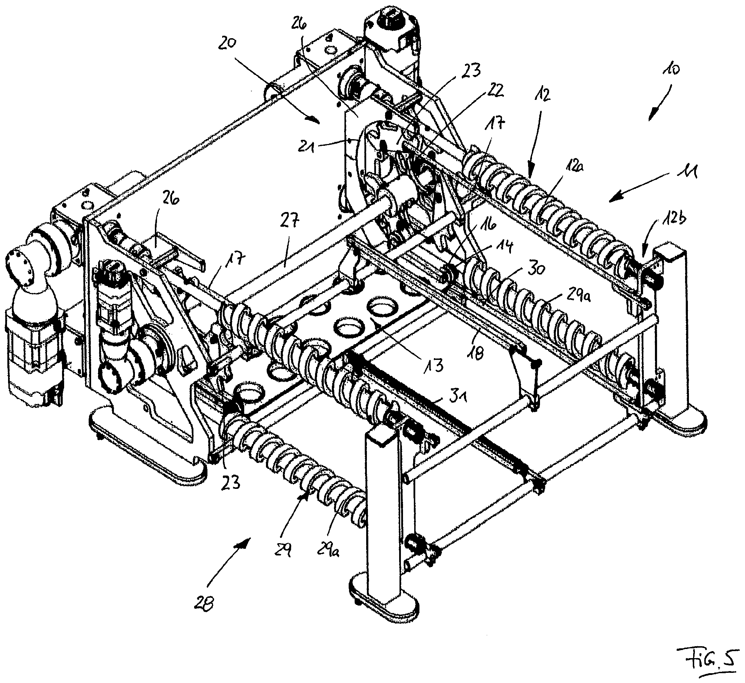

Aufgrund der Drehbewegung der Rotoren 23 wird der Behälterträger 13 längs der gekrümmten Führungsbahn 21 bewegt (Figur 4) und dabei geschwenkt bis er das Ende der Führungsbahnen 21 erreicht und zumindest mit seinen in Transportrichtung vorlaufenden Rollen 16 auf den Schienen 30 des unteren Linearförderers 28 aufliegt, wie es in Figur 5 dargestellt ist.

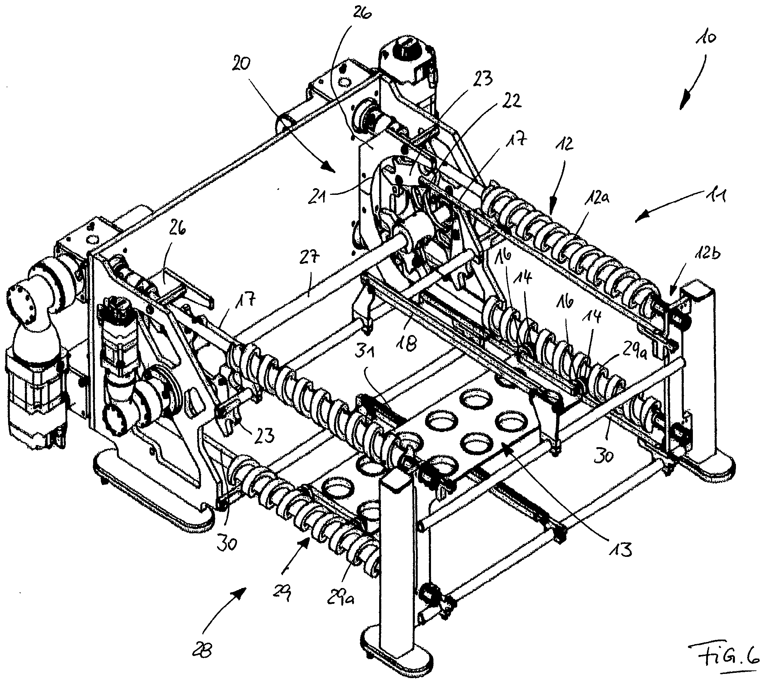

Bei einer weiteren Vorschubbewegung des Behälterträgers 13 greifen dessen in Transportrichtung verlaufenden Eingriffsteile 14 in die Förderschnecken 29 des unteren Linearförderers 28 ein. Gleichzeitig kommen die Aufnahmen 25 der Rotoren 23 außer Eingriff mit den in Transportrichtung nachlaufenden Eingriffsteilen 14 des Behälterträgers 13 (Figur 5), so dass dieser infolge der Drehbewegung der Förderschnecken 29 des unteren Linearförderers 28 längs der Schienen 30 verfahren wird, wie es in Figur 6 dargestellt ist, wobei der Behälterträger 13 auch auf der Mittelschiene 31 des unteren Linearförderers 28 aufliegt.

Am Ende des unteren Linearförderers 28 erfolgt in gleicher Weise eine Übergabe und ein Weitertransport des Behälterträgers 13 mittels des Kurvenförderers 34 (siehe Figur 1), woraufhin der Behälterträger 13 wieder in genannter Weise an den oberen Linearförderer 11 übergeben wird.

Wie Figur 1 zeigt, werden mit dem oberen Linearförderer 11 gleichzeitig eine Vielzahl von Behälterträgern 13 in einer kontinuierlichen Reihe transportiert, wobei zwei in Transportrichtung hintereinander angeordnete Behälterträger 13 entweder unmittelbar aneinanderstoßen oder in einem geringen Abstand von vorzugsweise weniger als 30mm und insbesondere weniger als 10mm transportiert werden. Auf diese Weise ist eine kontinuierliche Abfolge von Behälterträgern und somit von in den Behälterträgern angeordneten Behältern gegeben, die während des Transports längs der oberen Linearförderer 11 verschiedene Arbeitsstationen durchlaufen und insbesondere gefüllt und verschlossen werden.

Es sei davon ausgegangen, dass die Behälterträger 13 bei ihrem Transport längs der oberen Linearförderer 11 zwischen den beiden Kurvenförderern 20 und 34 mit einer mittleren Geschwindigkeit $V_o$ transportiert werden. Grundsätzlich wäre es möglich, die Behälterträger auch bei ihrem Transport längs der unteren Linearförderer 28 mit der gleichen mittleren Geschwindigkeit zu transportieren. Dies würde dazu führen, dass auch längs der unteren Linearförderer eine kontinuierliche Reihe von Behälterträgern 13 vorgesehen sein muss, um sicherzustellen, dass am Anfang der Transportbahn der obere Linearförderer 11 immer ein Behälterträger 13 zur Verfügung steht. Da dies eine große Anzahl von Behälterträgern 13 notwendig machen würde, ist vorgesehen, dass die Behälterträger 13 bei ihrem Transport längs der unteren Linearförderer 28 mit einer mittleren Geschwindigkeit $V_u$ transportiert werden, die wesentlich größer als die Geschwindigkeit $V_o$ ist. Insbesondere kann vorgesehen sein, dass gilt: $V_u \geq 1{,}5 V_o$. Insbesondere gilt: $V_u \geq 2{,}5\ V_o$ oder auch $V_u > 3{,}0\ V_o$. Dies hat zur Folge, dass weniger Behälterträger 13 notwendig sind, wie es in Figur 1 angedeutet ist.

**Patentansprüche**

1. Verpackungsmaschine mit zumindest einer endlos umlaufenden Behälter-Fördervorrichtung (10) mit zumindest einem Behälterträger (13), der mehrere Behälteraufnahmen (15) aufweist,

mit zumindest zwei übereinander angeordneten Linearförderern (11, 28) in Form von jeweils zwei auf Abstand parallel nebeneinander angeordneten drehangetriebenen Förderschnecken (12, 29), wobei der Behälterträger (13) zumindest ein Eingriffsteil (14) aufweist, das mit den Förderschnecken (12, 29) zur Übertragung einer Antriebsbewegung in Eingriff bringbar ist, mit zumindest zwei Kurvenförderern (20, 34), die jeweils eine gekrümmte Führungsbahn (21, 35) und jeweils eine rotierende Antriebsvorrichtung (22, 36) aufweisen, die zumindest eine Aufnahme (25) besitzt, die mit dem Behälterträger (13) in Eingriff bringbar ist, wobei in Transportrichtung zwischen den beiden Linearförderern (11, 28) jeweils einer der Kurvenförderer (20, 34) angeordnet ist, wobei der Behälterträger (13) am Ende der Förderschnecken (12, 29) mit diesen außer Eingriff bringbar und mit der rotierenden Antriebsvorrichtung (22, 36) des darauffolgenden Kurvenförderers (20, 34) in Eingriff bringbar ist, wobei die Linearförderer (11, 28) und die Kurvenförderer (20, 34) eine umlaufende Transportbahn bilden, wobei mehrere Behälterträger (13) längs des oberen Linearförderers (11) in einer Reihe mit einem gegenseitigen 1. Abstand von weniger als 30mm und mit einer mittleren Geschwindig-

keit $V_o$ transportierbar sind und die Behälterträger (13) längs des unteren Linearförderers (28) mit einem gegenseitigen 2. Abstand, der größer als der 1. Abstand ist, und mit einer mittleren Geschwindigkeit $V_u$ transportierbar sind, wobei die Geschwindigkeit $V_u$ größer als die Geschwindigkeit $V_o$ ist, wobei gilt:

$$V_u \geq 1,5\ V_o.$$

2. Verpackungsmaschine nach Anspruch 1, **dadurch gekennzeichnet, dass** gilt: $V_u \geq 2,5\ V_o$.

3. Verpackungsmaschine nach Anspruch 1 oder 2, **dadurch gekennzeichnet, dass** der 1. Abstand weniger als 10mm beträgt.

4. Verpackungsmaschine nach einem der Ansprüche 1 bis 3, **dadurch gekennzeichnet, dass** zumindest eine der Förderschnecken (12, 29) aus mehreren axial hintereinander angeordneten Förderschneckenteilen (12a, 29a) gebildet ist, die drehfest miteinander verbunden sind.

5. Verpackungsmaschine nach einem der Ansprüche 1 bis 4, **dadurch gekennzeichnet, dass** jeder Förderschnecke (12, 29) eine Schiene (17, 30) zugeordnet ist, auf der der Behälterträger (13) verfahrbar ist.

6. Verpackungsmaschine nach einem der Ansprüche 1 bis 5, **dadurch gekennzeichnet, dass** der Kurvenförderer (20, 34) zwei auf Abstand nebeneinander angeordnete Führungsträger (26, 38) aufweist, an denen jeweils eine Führungsbahn (21) ausgebildet ist.

7. Verpackungsmaschine nach einem der Ansprüche 1 bis 6 **dadurch gekennzeichnet, dass** die rotierende Antriebsvorrichtung (22, 36) des Kurvenförderers (20, 34) zwei auf Abstand nebeneinander angeordnete, dreh- angetriebene Rotoren (23, 39) aufweist, die jeweils mehrere über den Umfang verteilt angeordnete Rotorarme (24, 40) besitzen.

8. Verpackungsmaschine nach Anspruch 7, **dadurch gekennzeichnet, dass** an den Rotorarmen (24, 40) jeweils zumindest eine der Aufnahmen (25, 37) angeordnet ist.

9. Verpackungsmaschine nach Anspruch 8, **dadurch gekennzeichnet, dass** die Aufnahme (25, 37) am radial äußeren, freien Ende des jeweiligen Rotorarms (24, 40) angeordnet ist.

10. Verpackungsmaschine nach einem der Ansprüche 1 bis 9, **dadurch gekennzeichnet, dass** die Aufnahme (25, 37) mit dem Eingriffsteil (14) des Behälterträgers (13) in Eingriff bringbar ist.

11. Verpackungsmaschine nach einem der Ansprüche 1 bis 10, **dadurch gekennzeichnet, dass** der Behälterträger (13) auf entgegengesetzten Seiten jeweils mehrere, in Transportrichtung beabstandete Rollen (16) aufweist, mit denen er auf den Schienen (17, 30) ab-gestützt ist.

12. Verpackungsmaschine nach Anspruch 11, **dadurch gekennzeichnet, dass** auf der dem Behälterträger (13) abgewandten Seite der Rollen (16) jeweils eines der Eingriffsteile (14) gelagert ist

13. Verpackungsmaschine nach einem der Ansprüche 1 bis 12, **dadurch gekennzeichnet, dass** die Verpackungsmaschine eine Becherfüllmaschine ist.

## Claims

1. Packaging machine comprising a continuously circulating container conveyor device (10) comprising at least one container carrier (13) which has a plurality of container receptacles (15),

   at least two linear conveyors (11, 28) arranged above one another in the form of respectively two rotary driven screw conveyors (12, 29) arranged in parallel at a distance next to each other, wherein the container carrier (13) has at least one engagement part (14), which can be brought into engagement with the screw conveyors (12, 29) for transferring a drive movement, at least two curved conveyors (20, 34), which each have a curved guide track (21, 35) and each have a rotating drive device (22, 36), which has at least one receptacle (25), which can be brought into engagement with the container carrier (13), wherein a respective one of the curved conveyors (20, 34) is arranged in transport direction between the two linear conveyors (11, 28), wherein at the end of the screw conveyors (12, 29) the container carrier (13) can be disengaged from them and can be brought into engagement with the rotating drive device (22, 36) of the following curved conveyor (20, 34), wherein the linear conveyors (11, 28) and the curved conveyors (20, 34) form a circulating transport track, wherein a plurality of container carriers (13) can be transported along the upper linear conveyor (11) in a series with a mutual 1st spacing of less than 30 mm and at an average speed $V_o$ and the container carriers (13) can be transported along the lower linear conveyor (28) with a mutual 2nd spacing, that is greater than the 1st spac-

ing, and at an average speed $V_u$, wherein the speed $V_u$ is greater than the speed $V_o$, wherein: $V_u \geq 1.5\ V_o$.

2. The packaging machine according to claim 1, **characterized in that** $V_u \geq 2.5\ V_o$.

3. The packaging machine according to claim 1 or 2, **characterized in that** the 1$^{st}$ spacing is less than 10 mm.

4. The packaging machine according to any of claims 1 to 3, **characterized in that** at least one of the screw conveyors (12, 29) is formed from a plurality of screw conveyors parts (12a, 29a) arranged axially behind one another, which are connected to one another in rotationally fixed manner.

5. The packaging machine according to any of claims to 4, **characterized in that** a rail (17, 30) is assigned to each screw conveyor (12, 29), upon which the container carrier (13) can be moved.

6. The packaging machine according to any of claims 1 to 5, **characterized in that** the curved conveyor (20, 34) has two guide carriers (26, 38) arranged at a distance next to each other, at which in each case a guide track (21) is embodied.

7. The packaging machine according to any of claims 1 to 6, **characterized in that** the rotating drive device (22, 36) of the curved conveyor (20, 34) has two rotary driven rotors (23, 39) arranged at a distance, which each have several rotor arms (24, 40) arranged distributed over the circumference.

8. The packaging machine according to claim 7, **characterized in that** at least one of the receptacles (25, 37) is arranged on each of the rotor arms (24, 40).

9. The packaging machine according to claim 8, **characterized in that** the receptacle (25, 37) is arranged on the radially outer free end of the respective rotor arm (24, 40).

10. The packaging machine according to any of claims 1 to 9, **characterized in that** the receptacle (25, 37) can be brought into engagement with the engagement part (14) of the container carrier (13).

11. The container conveyor device according to any of claims 1 to 10, **characterized in that** the container carrier (13) respectively has a plurality of rollers (16) on opposite sides spaced apart in the transport direction, with which it is supported on the rails (17, 30).

12. The packaging machine according to claim 11, **characterized in that** one of the engagement parts (14) is mounted on the side of the respective rollers (16) averted from the container carrier (13).

13. The packaging machine according to any of claims 1 to 12, **characterized in that** the packaging machine is a cup filling machine.

**Revendications**

1. Machine d'emballage comprenant au moins un équipement de transport de récipients circulant sans fin (10),

au moins un porte-récipients (13) qui présente plusieurs logements de récipient (15), au moins deux transporteurs linéaires (11, 28) agencés l'un au-dessus de l'autre, chacun sous la forme de deux vis transporteuses (12, 29) entraînées en rotation et agencées côte à côte parallèlement en étant distantes l'une de l'autre, le porte-récipients (13) présentant au moins une pièce de prise (14) qui peut être amenée en prise avec les vis transporteuses (12, 29) pour la transmission d'un mouvement d'entraînement, au moins deux transporteurs curvilignes (20, 34) qui présentent chacun une piste de guidage (21, 35) courbée et un dispositif d'entraînement en rotation (22, 36), qui possède au moins un logement (25), qui peut être amené en prise avec le porte-récipients (13), l'un des transporteurs curvilignes (20, 34) étant respectivement agencé entre les deux transporteurs linéaires (11, 28) dans la direction de transport, le porte-récipients (13) pouvant être amené hors de prise avec les vis transporteuses (12, 29) à l'extrémité de celles-ci et être amené en prise avec le dispositif d'entraînement en rotation (22, 36) du transporteur curviligne (20, 34) qui suit, les transporteurs linéaires (11, 28) et les transporteurs curvilignes (20, 34) formant une piste de transport circulante, dans laquelle plusieurs porte-récipients (13) peuvent être transportés le long du transporteur linéaire (11) supérieur selon une rangée avec une 1$^e$ distance réciproque inférieure à 30 mm et avec une vitesse $V_o$ moyenne et les porte-récipients (13) peuvent être transportés le long du transporteur linéaire (28) inférieur avec une 2$^e$ distance réciproque, qui est supérieure à la 1$^e$ distance, et avec une vitesse $V_u$ moyenne, dans laquelle la vitesse $V_u$ est supérieure à la vitesse $V_o$, avec :

$$V_u \geq 1{,}5\ V_o.$$

2. Machine d'emballage selon la revendication 1, **ca-**

**ractérisée en ce que** : $V_u \geq 2,5\, V_o$.

**3.** Machine d'emballage selon la revendication 1 ou 2, **caractérisée en ce que** la l$^e$ distance est inférieure à 10 mm.

**4.** Machine d'emballage selon l'une des revendications 1 à 3, **caractérisée en ce qu'**au moins l'une des vis transporteuses (12, 29) est formée de plusieurs pièces de vis transporteuse (12a, 29a) agencées axialement les unes derrière les autres, qui sont reliées les unes aux autres de façon solidaire en rotation.

**5.** Machine d'emballage selon l'une des revendications 1 à 4, **caractérisée en ce qu'**à chaque vis transporteuse (12, 29) est affecté un rail (17, 30) sur lequel le porte-récipients (13) peut être déplacé.

**6.** Machine d'emballage selon l'une des revendications 1 à 5, **caractérisée en ce que** le transporteur curviligne (20, 34) présente deux supports de guidage (26, 38) agencés côte à côte à distance, contre lesquels une piste de guidage (21) est respectivement formée.

**7.** Machine d'emballage selon l'une des revendications 1 à 6, **caractérisée en ce que** le dispositif d'entraînement (22, 36) en rotation du transporteur curviligne (20, 34) présente deux rotors (23, 39) entraînés en rotation et agencés côte à côte à distance, qui possèdent respectivement plusieurs bras de rotor (24, 40) agencés de façon répartie sur la périphérie.

**8.** Machine d'emballage selon la revendication 7, **caractérisée en ce qu'**au niveau des bras de rotor (24, 40) est respectivement agencé au moins un des logements (25, 37).

**9.** Machine d'emballage selon la revendication 8, **caractérisée en ce que** le logement (25, 37) est agencé au niveau de l'extrémité radialement extérieure et libre du bras de rotor (24, 40) respectif.

**10.** Machine d'emballage selon l'une des revendications 1 à 9, **caractérisée en ce que** le logement (25, 37) peut être amené en prise avec la pièce de prise (14) du porte-récipients (13).

**11.** Machine d'emballage selon l'une des revendications 1 à 10, **caractérisée en ce que** le porte-récipients (13) présente sur des côtés opposés respectivement plusieurs rouleaux (16) espacés dans la direction de transport, avec lesquels il est soutenu sur les rails (17, 30).

**12.** Machine d'emballage selon la revendication 11, **caractérisée en ce que** l'une des pièces de prise (14) est respectivement montée sur le côté opposé au porte-récipients (13) des rouleaux (16).

**13.** Machine d'emballage selon l'une des revendications 1 à 12, **caractérisée en ce que** la machine d'emballage est une machine de remplissage de gobelets.

FIG. 1

FIG. 2

FIG. 3

Fig. 4

FIG. 5

Fig. 6

Fig. 7

Fig. 8

EP 3 768 619 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0089543 A